# EUROPEAN PATENT APPLICATION

(11) **EP 4 417 523 A1**
(43) Date of publication of application: **21.08.2024**
(21) Application number: 22881307.7
(22) Date of filing: 11.10.2022
(51) Int. Cl.: B64F 1/06, B66D 1/60, F16F 1/00

(54) **CATAPULT**

(30) Priority: 12.10.2021 KR 20210135204
(71) Applicant: Lee, Jae-Chang, Hwaseong-si, Gyeonggi-do 18477 (KR); Lee, Jung Hoon, Seoul 03310 (KR); Lee, So Jung, Yongin-si, Gyeonggi-do 16843 (KR)
(72) Inventor: Lee, Jae-Chang, Hwaseong-si, Gyeonggi-do 18477 (KR); Lee, Jung Hoon, Seoul 03310 (KR); Lee, So Jung, Yongin-si, Gyeonggi-do 16843 (KR)
(74) Representative: Patentanwaltskanzlei Matschnig & Forsthuber OG
(86) International application number: PCT/KR2022/015284
(87) International publication number: WO 2023/063680

(57) **Abstract**

A catapult is disclosed. The catapult according to an embodiment of the present invention, comprises: a take-off assisting member contacting an aircraft to push the aircraft; a power source coupled to the take-off assisting member to drive the take-off assisting member; and a winch coupled to the take-off assisting member.

## Description

### Technical Field

The present application claims the benefit of priority from Korean Unexamined Patent Application No. 10-2021-0135204 filed on October 12, 2021, which is incorporated herein by reference in it's entirety for all purposes.

The present invention relates to a catapult, and more specifically, to a catapult having a novel structure capable of assisting a take-off of an aircraft.

### Background Art

In general, aircraft taking off from the ground may carry a large amount of fuel and cargo because the aircraft take off with sufficient acceleration through a large space and a long runway on the ground.

However, it may be difficult to operate supersonic aircraft or large aircraft in small cities due to difficulty in building a long runway.

In addition, since the average air temperature rises due to global warming, large aircraft sometimes fail to take off in midsummer due to lack of lift. In the case of high mountain areas, it is difficult for large aircraft to operate since the air is rare even during normal times.

In particular, aircraft, including carrier-based aircraft onboard an aircraft carrier, are required to take off from a narrow space and a short runway, resulting in a lack of lift, and accordingly the amounts of weapon and fuel mounted on the aircraft are limited.

Therefore, aircraft carriers are usually configured to assist take-off of the aircraft through forced ejection equipment called a catapult, or assist take-off of the aircraft by inclining a bow of the aircraft carrier to face upward like a ski jump.

The catapult is classified into a steam type in which a piston of a cylinder is moved by high-pressure steam generated from water boiled in a nuclear reactor or boiler, quickly flies an aircraft to a bow while and then returns to its original position, and an electronic type that flies an aircraft to the bow by operating an electromagnetic aircraft launch system (EMALS), which operates with electricity generated from a generator using high-pressure water vapor generated from a nuclear reactor. Herein, EMALS refers to an electronic aircraft launch system.

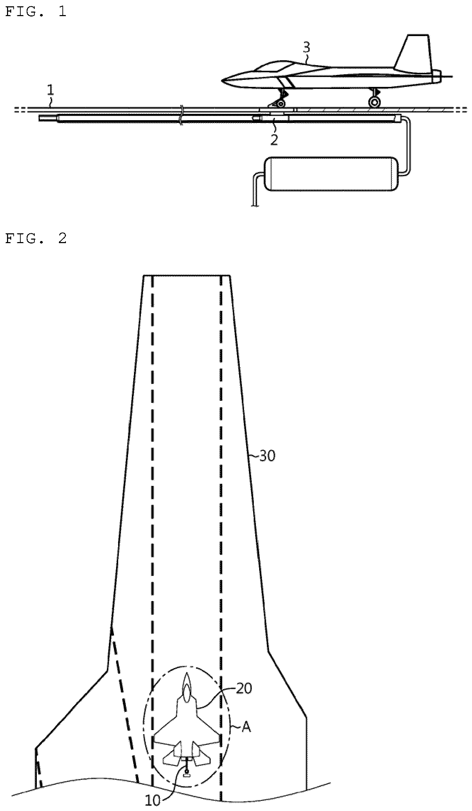

FIG. 1 is a view showing a state in which a piston of a cylinder in a steam type catapult is provided inside a hull in a conventional aircraft carrier.

Referring to FIG. 1, a piston 2 of a cylinder provided inside a hull 1 flies an aircraft 3 away while reciprocating along the hull 1. However, in the conventional catapult, since the aircraft carrier's hull 1 serves as a support to flies the aircraft 3 into the air, the forward speed of the hull 1 may slow down due to reaction against strong force when the aircraft 3 takes off, and there may be also a risk that the hull 1 may be damaged.

In addition, the cost for installing the conventional catapult on an aircraft carrier is excessively high.

Meanwhile, in the case of the ski jump type, since the bow is inclined upward, the acceleration of the aircraft may slow down when the aircraft takes off along the slope of the bow. In addition, the weight of the hull may be increased and it may be impossible to utilize head wind since wind blowing from the front side is blocked by the slope of the bow.

Accordingly, the amounts of weapon and fuel mounted on the aircraft may be reduced, thereby causing a disadvantage in actual combat.

### Disclosure

### Technical Problem

Therefore, the technical problem to be achieved by the present invention is to provide a catapult having a simple structure, easily manufactured and installed, extremely reducing costs and sufficiently assisting a take-off of an aircraft.

### Technical Solution

According to an aspect of the present invention, there is provided with a catapult including a take-off assisting member in contact with an aircraft to push the aircraft; a power source coupled to the take-off assisting member to drive the take-off assisting member; and a winch coupled to the take-off assisting member.

In addition, the take-off assisting member may include: a contact frame in contact with a strut provided in a landing gear of the aircraft; and a body frame extending from the contact frame, coupled to a driving wheel, and coupled to the power source.

In addition, the take-off assisting member may include: a contact roller in contact with a landing wheel provided in the landing gear of the aircraft; and a body frame rotatably coupled to the contact roller, coupled to the driving wheel, and coupled to the power source.

In addition, the take-off assisting member may include: a contact frame in contact with a strut provided in a landing gear of the aircraft; a contact roller in contact with a landing wheel provided in the landing gear of the aircraft; and a body frame rotatably coupled to the contact roller, movably coupled to the contact frame, coupled to the driving wheel, and coupled to the power source.

In addition, the take-off assisting member may be operated in at least one of a manual mode, an autonomous mode, and a remote control mode.

In addition, the power source may include at least one of a turbo jet engine, a turbofan jet engine, an afterburning turbojet engine, an afterburning turbofan jet engine, a turboprop jet engine, and a propeller propulsion reciprocating piston engine.

In addition, the power source may be provided to generate reverse thrust.

In addition, the take-off assisting member may returns to a starting line by at least one of the reverse thrust mode of the power source and the operation mode of the winch.

In addition, the winch may include: a wire coupled to the take-off assisting member; and a spool provided for winding the wire and coupled to a support provided on an outside of the take-off assisting member.

In addition, the winch may include: a wire coupled to a support provided on an outside of the take-off assisting member; and a spool provided for winding the wire and coupled to the take-off assisting member.

In addition, a shock absorber may be coupled to at least one of the take-off assisting member, the wire, and the support.

In addition, the shock absorber may be provided to alleviate shock when the take-off assisting member stops or shock caused by a collision with the support when the take-off assisting member moves backward.

### Advantageous Effects

Thus, according to the embodiments of the present invention, the take-off assisting member for pushing the aircraft is used, so that the catapult can have a simple structure, can be easily manufactured and installed, can extremely reduce costs and can sufficiently assist a take-off of an aircraft.

### Description of Drawings

FIG. 1 is a view showing a state in which a piston of a cylinder in a steam type catapult is provided inside a hull in a conventional aircraft carrier.
FIGS. 2 and 3 are views showing a process of an aircraft taking off from an aircraft carrier equipped with a catapult according to one embodiment of the present invention.
FIG. 4 is an enlarged view of portion A of FIG. 2.
FIG. 5(a) is a side view of a catapult according to a first embodiment of the present invention, and FIG. 5(b) is a top view of the catapult according to the first embodiment of the present invention.
FIG. 6(a) is a side view of a catapult according to a second embodiment of the present invention, and FIG. 6(b) is a top view of the catapult according to the second embodiment of the present invention.
FIG. 7(a) is a side view of a catapult according to a third embodiment of the present invention, and FIG. 7(b) is a top view of the catapult according to the third embodiment of the present invention.
FIG. 8(a) is a side view showing a contact frame moved rearward from FIG. 7(a), and FIG. 8(b) is a plan view showing the contact frame moved rearward from FIG. 7(b).
FIG. 9(a) is a side view of a catapult according to a fourth embodiment of the present invention, and FIG. 9(b) is a top view of the catapult according to the fourth embodiment of the present invention.
FIG. 10(a) is a side view of a catapult according to a fifth embodiment of the present invention, and FIG. 10(b) is a top view of the catapult according to the fifth embodiment of the present invention.
FIG. 11 is a view showing an embodiment different from the winch of FIG. 5(a).

### Best Mode

### Mode for Invention

Hereinafter, exemplary embodiments of the present invention will be described in detail with reference to the accompanying drawings. The terms and words used in the specification and claims of the present invention will not be construed as limited to a conventional or lexical meaning, and will be construed as the meanings and concepts based on the principle that "an inventor may define the concept of the term properly in order to describe the invention in the best way". Therefore, the embodiments described in this specification and the configurations shown in the drawings are only one of the most exemplary embodiments of the present invention and do not represent the entire technical idea of the present invention. Therefore, it will be understood that various equivalents and modifications may be substituted therefor at the time of filing of the present application.

In the drawings, the size of each component or a specific part constituting the component is exaggerated, omitted, or schematically shown for convenience and clarity of explanation. Accordingly, the size of each component does not entirely reflect the actual size. When it is determined that the detailed description on a related known function or configuration possibly makes the subject matter of the present invention unclear unnecessarily, such descriptions will be omitted.

The term "couple" or "connect" used in this specification refers not only to the case where one member and other member are directly coupled or directly connected, but also to the case where one member is indirectly coupled to or indirectly connected to the other member through a joint member.

A catapult according to one embodiment of the present invention may be used in various places. For example, the catapult may be used not only in small cities where it is difficult to build a long runway, or in alpine areas where the air is thin, but also on regular runways.

However, for convenience of explanation, the following description is limited to the case where the catapult according to the embodiment of the present invention is used to assist the take-off of an aircraft including a carrier-based aircraft on an aircraft carrier (hereinafter simply referred to as an aircraft), and it will be noted that the scope of the present invention is not reduced to the aircraft carrier by the limiting description.

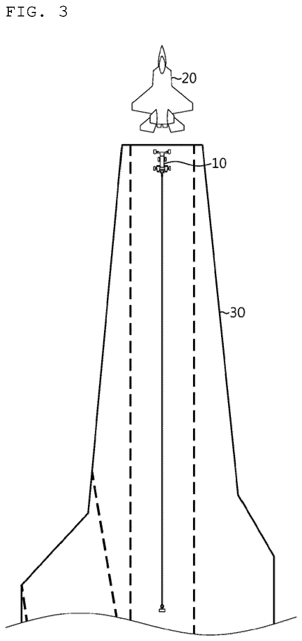

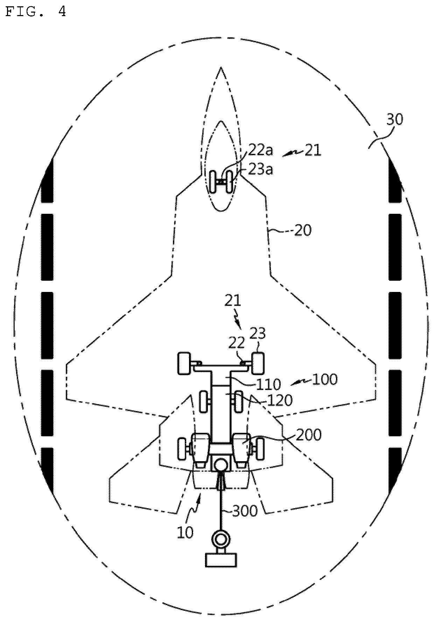

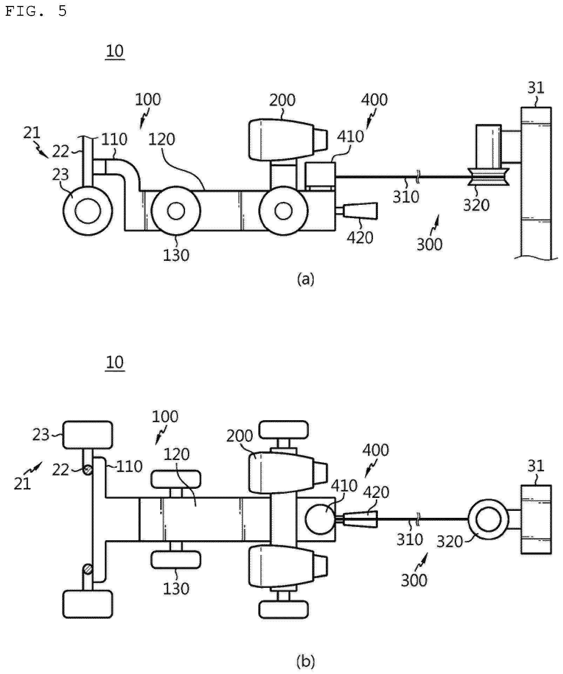

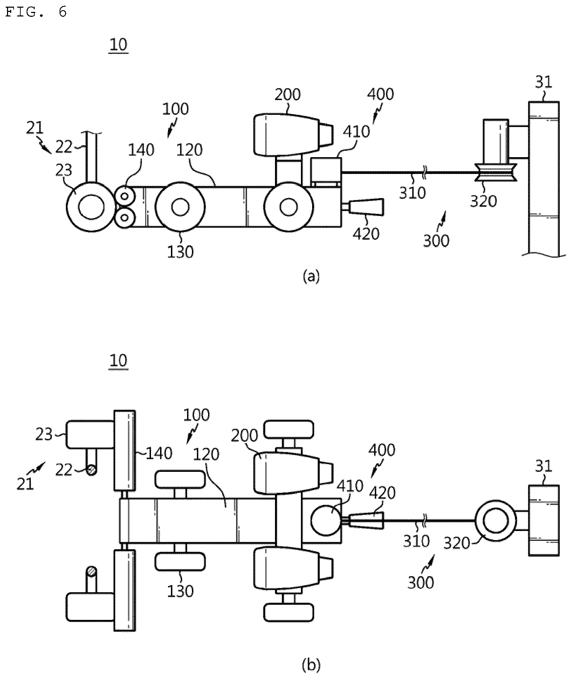

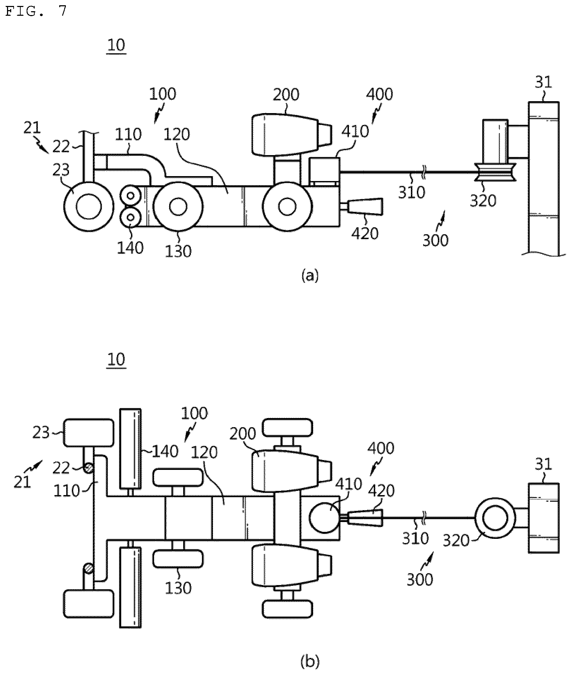

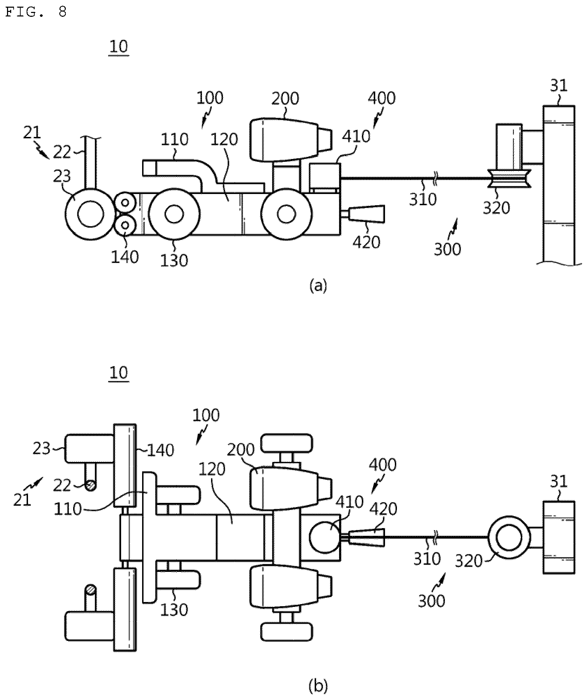

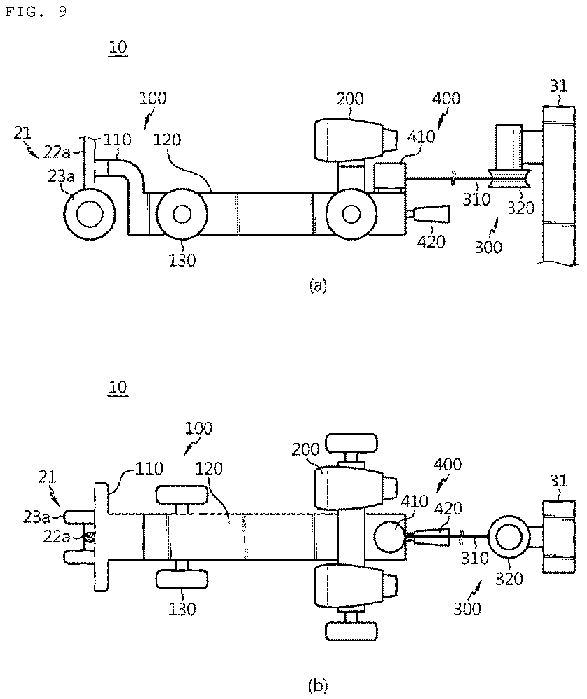

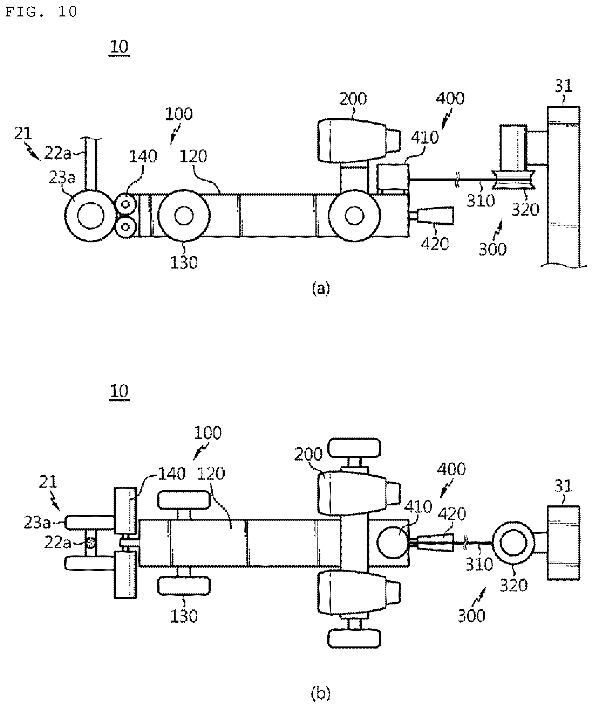

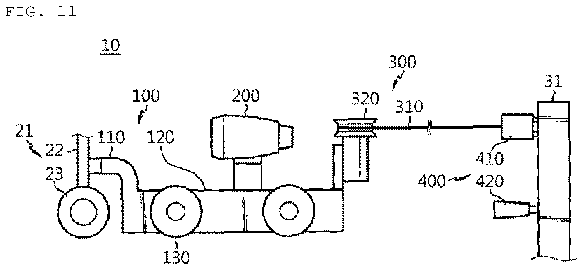

FIGS. 2 and 3 are views showing a process of an aircraft taking off from an aircraft carrier equipped with the catapult according to one embodiment of the present invention; FIG. 4 is an enlarged view of portion A of FIG. 2; FIG. 5(a) is a side view of a catapult according to a first embodiment of the present invention; FIG. 5(b) is a top view of the catapult according to the first embodiment of the present invention; FIG. 6(a) is a side view of a catapult according to a second embodiment of the present invention; FIG. 6(b) is a top view of the catapult according to the second embodiment of the present invention; FIG. 7(a) is a side view of a catapult according to a third embodiment of the present invention; FIG. 7(b) is a top view of the catapult according to the third embodiment of the present invention; FIG. 8(a) is a side view showing a contact frame moved rearward from FIG. 7(a); FIG. 8(b) is a plan view showing the contact frame moved rearward from FIG. 7(b); FIG. 9(a) is a side view of a catapult according to a fourth embodiment of the present invention; FIG. 9(b) is a top view of the catapult according to the fourth embodiment of the present invention; FIG. 10(a) is a side view of a catapult according to a fifth embodiment of the present invention; FIG. 10(b) is a top view of the catapult according to the fifth embodiment of the present invention; and FIG. 11 is a view showing an embodiment different from the winch of FIG. 5(a) .

Referring to FIGS. 5(a) and 5(b), the catapult 10 according to the first embodiment of the present invention includes a take-off assisting member 100, a power source 200, and a winch 300.

The take-off assisting member 100 is provided in contact with an aircraft 20 (see FIGS. 2 and 4) to push the aircraft 20. The take-off assisting member 100 may be configured to include a contact frame 110 and a body frame 120.

The contact frame 110 comes into contact with a strut 22 provided in a landing gear 21 of the aircraft 20. In other words, the contact frame 110 comes into contact with the strut 22 of the aircraft 20 to push the strut 22.

In addition, the body frame 120 extends from the contact frame 110, is coupled to driving wheels 130, and is coupled to the power source 200. An auxiliary wheel (not shown) may be coupled to the body frame 120 or the driving wheel 130 to prevent the body frame 120 from overturning.

When the driving wheels 130 coupled to the body frame 120 are rotated due to power generated from the power source 200, the body frame 120 is moved forward and the contact frame 110 coupled to the body frame 120 pushes the strut 22 of the aircraft 20, thereby assisting the take-off of the aircraft 20.

For example, referring to FIGS. 2 and 4, the strut 22 of the aircraft 20 is preparing for the take-off while coming into contact with the contact frame 110 of the take-off assisting member 100. In addition, referring to FIG. 3, the aircraft 20 is moved forward toward a bow of an aircraft carrier 30 by its own propulsion, and at this time, the contact frame 110 of the take-off assisting member 100 pushes the strut 22 while coming into contact with the with strut 22 of the aircraft 20 so as to assists the take-off of the aircraft 20.

As a result, the catapult 10 according to the first embodiment of the present invention sufficiently assists the take-off of the aircraft 20, so that the aircraft 20 can take off without difficulty even on a short runway.

The take-off assisting member 100 may be operated in a manual mode. In other words, the user may manually operate the take-off assisting member 100. In addition, the take-off assisting member 100 may be operated in an autonomous driving mode. In other words, autonomous operation is possible in a manner preset by the user. In addition, the take-off assisting member 100 may be operated in a remote control mode by wire or wirelessly.

The power source 200 is coupled to the take-off assisting member 100 to drive the take-off assisting member 100. The power source 200 may be configured in various ways. For example, the power source 200 may be configured to include at least one of a turbojet engine, a turbofan jet engine, an afterburning turbojet engine, an afterburning turbofan jet engine, a turboprop jet engine, and a propeller propulsion reciprocating piston engine. However, the power source 200 is not limited to the above configuration.

Since the take-off assisting member 100, which is coupled to the power source 200 of the above-described jet engine series, specifically is composed of only an engine itself, a frame, a fuel tank, wheels, and a controller, the total weight is merely 1/15 to 1/20 of the aircraft 20, so that the entire energy generated from the power source 200 can be used for ejection of the aircraft 20, and since a reverse thrust conversion device is provided to switch the flow of exhaust gas or air forward or rearward by simple operation, the ejection of the aircraft carrier 30 frequently moved forward and backwards can be quickly prepared.

Thus, when the power source 200 of the above-described embodiments is used, the cost can be significantly reduced compared to the conventional steam type or electronic type.

The power source 200 may be provided to generate thrust in a reverse direction, that is, reverse thrust. Since various technologies are already known for the reverse thrust scheme of an engine, detailed description will be omitted.

In other words, when thrust is generated in a forward direction from the power source 200, the take-off assisting member 100 pushes the aircraft 20 to assist the take-off of the aircraft 20, and the take-off assisting member 100 returns to a reference position, for example, the starting line, by the thrust in a reverse direction after the aircraft 20 takes off from the aircraft carrier 30.

The winch 300 is coupled to the take-off assisting member 100 to prevent the take-off assisting member 100 from deviating beyond a preset range. For example, when the winch 300 is not coupled to the take-off assisting member 100, the take-off assisting member 100 may be separated from the hull of the aircraft carrier 30 and fall into the sea after assisting the take-off of the aircraft 20. In order to prevent this, the winch 300 is coupled to the take-off assisting member 100.

Referring to FIGS. 5(a) and 5(b) as one embodiment of the winch 300, the winch 300 may include a wire 310 and a spool 320. The wire 310 may be coupled to the take-off assisting member 100, and the spool 320 on which the wire 310 is wound may be coupled to a support 31 provided on an outside of the take-off assisting member 100. The support 31 may be provided integrally with the aircraft carrier 30 or may be provided separately from the aircraft carrier 30.

Referring to FIG. 11 as another embodiment of the winch 300, the winch 300 may include a wire 310 and a spool 320, in which the wire 310 may be coupled to the support 31 provided on the outside of the take-off assisting member 100, and the spool 320 on which the wire 310 is wound may be coupled to the take-off assisting member 100. The features are the same as in the above embodiment in which the support 31 may be provided integrally with the aircraft carrier 30 or may be provided separately from the aircraft carrier 30.

Meanwhile, the wire 310 provided in the winch 300 may be formed of an elastic material. However, when the wire 310 does not have elasticity, the take-off assisting member 100 may be damaged due to force applied between the assisting member 100 and the wire 310 at the point when the take-off assisting member 100 completes pushing the aircraft 20.

In order to prevent the damage to the take-off assisting member 100, referring to FIGS. 5 and 11, a shock absorber 400 may be coupled to at least one of the take-off assisting member 100, the wire 310, and the support 31. A first shock absorber 410 is provided to alleviate shock when the take-off assisting member 100 stops, and a second shock absorber 420 is provided to alleviate shock from a collision with the support 31 when the take-off assisting member 100 is moved backward. The shock absorber 400 may include various types of springs.

FIG. 6(a) is a side view of a catapult according to a second embodiment of the present invention; and FIG. 6(b) is a top view of the catapult according to the second embodiment of the present invention.

Referring to FIGS. 6(a) and 6(b), the take-off assisting member 100 may be configured to include a contact roller 140 and a body frame 120.

The contact roller 140 comes into contact with the landing wheel 23 provided in the landing gear 21 of the aircraft 20. In other words, the contact roller 140 comes into contact with the landing wheel 23 of the aircraft 20 to push the landing wheel 23. In the embodiment of FIG. 6, the landing wheel 23 refers to a rear wheel of the aircraft 20.

In addition, the contact roller 140 is rotatably coupled to the body frame 120, coupled to the driving wheel 130, and coupled to the power source 200. In other words, when the driving wheels 130 coupled to the body frame 120 are rotated due to the power generated from the power source 200, the body frame 120 is moved forward and the contact rollers 140 coupled to the body frame 120 push the landing wheels 23 of the aircraft 20, thereby assisting the take-off of the aircraft 20.

The descriptions common to the parts previously described in the embodiment of FIG. 5 are replaced with the above-described descriptions, and the descriptions are equivalently applied to FIG. 6.

FIG. 7(a) is a side view of a catapult according to a third embodiment of the present invention; and FIG. 7(b) is a top view of the catapult according to the third embodiment of the present invention. FIG. 8(a) is a side view showing the contact frame moved rearward from FIG. 7(a), and FIG. 8(b) is a plan view showing the contact frame moved rearward from FIG. 7(b).

Referring to FIGS. 7 and 8, the take-off assisting member 100 includes a contact frame 110, a contact roller 140, and a body frame 120.

The contact frame 110 comes into contact with a strut 22 provided in a landing gear 21 of the aircraft 20. In other words, the contact frame 110 comes into contact with the strut 22 of the aircraft 20 to push the strut 22. However, the contact frame 110 is fixed to the body frame 120 in the embodiment of FIG. 5, and the contact frame 110 is movably fixed to the body frame in the embodiments of FIGS. 7 and 8.

The contact roller 140 comes into contact with the landing wheel 23 provided in the landing gear 21 of the aircraft 20. In other words, the contact roller 140 comes into contact with the landing wheel 23 of the aircraft 20 to push the landing wheel 23.

In addition, the contact roller 140 is rotatably coupled to the body frame 120, the contact frame 110 is movably coupled thereto, the driving wheel 130 is coupled thereto, and the power source 200 is coupled thereto.

In the embodiments of FIGS. 7 and 8, both the contact frame 110 of FIG. 5 and the contact roller 140 of FIG. 6 may be provided, and one of the contact frame 110 and the contact roller 140 may be selected to push the aircraft 20 or both the contact frame 110 and the contact roller 140 may be provided to push the aircraft 20.

The descriptions common to the parts previously described in the embodiment of FIG. 5 or 6 are replaced with the above-described descriptions, and the descriptions are equivalently applied to FIGS. 7 and 8.

FIG. 9(a) is a side view of a catapult according to a fourth embodiment of the present invention; and FIG. 9(b) is a top view of the catapult according to the fourth embodiment of the present invention.

There is a difference in that FIGS. 5 to 8 show that the take-off assisting member 100 pushes the strut 22 or landing wheel 23 at the rear of the aircraft 20, however, FIG. 9 shows that the take-off assisting member 100 pushes the strut 22a at the front of the aircraft 20. However, parts common to the descriptions in FIGS. 5 to 8 are replaced with the above-described description in relation to FIG. 9.

FIG. 9 shows the embodiment in which the contact frame 110 comes into contact with the front strut 22a of the aircraft 20. In other words, the contact frame 110 pushes the front strut 22a of the aircraft 20 in FIG. 9, however the contact frame pushes the rear strut 22 in FIG. 5. Since other configurations are common to the embodiment of FIG. 5, the description of FIG. 5 will be replaced.

FIG. 10(a) is a side view of a catapult according to a fifth embodiment of the present invention; and FIG. 10(b) is a top view of the catapult according to the fifth embodiment of the present invention.

FIG. 10 also shows the mode in which the take-off assisting member 100 pushes the front landing wheel 23a of the aircraft 20, and the contact roller 140 is provided in FIG. 10. Parts common to the descriptions in FIGS. 5 to 9 are replaced with the above-described description in relation to FIG. 10.

FIG. 10 shows the embodiment in which the contact roller 140 comes into contact with the front landing wheel 23a of the aircraft 20. In other words, the contact roller 140 pushes the front landing wheel 23a of the aircraft 20 in FIG. 10, however the contact roller pushes the rear landing wheel 23 in FIG. 6. Since other configurations are common to the embodiment of FIG. 6, the description of FIG. 6 will be replaced.

Although not shown in the drawings, the embodiment equipped with both the contact frame 110 and the contact roller 140 may also be applied to the front landing gear 21 of the aircraft 20, that is, the front strut 22a and the front landing wheel 23a in the above-described FIGS. 7 and 8.

Hereinafter, the operation and advantageous effect of the catapult 10 according to one embodiment of the present invention will be described with reference to the drawings.

The take-off assisting member 100 of the catapult 10 according to the one embodiment of the present invention may be configured to come into contact with the strut 22 provided in the landing gear 21 of the aircraft 20 to push the strut 22; configured to come into contact with the landing wheel 23 provided in the landing gear 21 to push the landing wheel 23; and configured to selectively push either the strut 22 or the landing wheel 23, or push both the strut 22 and the landing wheel 23.

As shown in FIG. 2, the take-off assisting member 100 and the aircraft 20 are located at starting lines, respectively and the take-off assisting member 100 is coupled to the winch 300. The winch 300 may be coupled to a support 31 provided integrally with the aircraft carrier 30, or may be coupled to and supported by a support 31 provided separately from the aircraft carrier 30.

When the aircraft 20 departs, the take-off assisting member 100 departs together and pushes the aircraft 20 to assists the take-off of the aircraft 20.

When the take-off assisting member 100 assists the take-off, the aircraft 20 can take off smoothly even from the aircraft carrier 30 having a short runway as shown in FIG. 3, and the take-off assisting member 100 returns to a reference position, that is, the starting line after the take-off of the aircraft 20 is completed.

The take-off assisting member 100 may be provided to return to the starting line by the above-described reverse thrust mode of the power source 200, or may be provided to return to the starting line by operating the winch 300. The reverse thrust mode of the power source 200 and the mode of operating the winch 300 may be used together.

Meanwhile, the embodiments of the present invention described above may also be used in vertical take-off and landing aircraft. The vertical take-off and landing aircraft may not only take off and land vertically, but also take off while moving along the runway like the general aircraft 20. In the latter mode, since the vertical take-off and landing aircraft is also assisted in the take-off by the take-off assisting member 100, large amounts of fuel and weapon can be mounted.

In addition, the above-described advantageous effect is also applied in the aircraft carrier 30 of the above-described ski jump type.

Since the take-off assisting member 100, the power source 200, and the winch 300 used in the embodiments of the present invention are considerably lighter in weight compared to the conventional steam type catapult 10 or electronic type catapult 10, the burden and risk of damage in the hull can be reduced. In addition, the catapult according to the present invention can have a simple structure, can be easily manufactured and installed, and can remarkably reduce the cost of the conventional catapult 10. In addition to all of the above advantages, the take-off of the aircraft 20 can be sufficiently assisted.

Although the present invention has been described with reference to the limited embodiments and drawings, the present invention is not limited thereto. It will be apparent that a person having ordinary skill in the art may carry out various deformations and modifications within the scope without departing from the idea of the present invention, the following claims and equivalents thereof.

### Industrial Applicability

The present invention relates to a catapult and may be used in industries related to the catapult.

## Claims

1. A catapult comprising:
a take-off assisting member in contact with an aircraft to push the aircraft;
a power source coupled to the take-off assisting member to drive the take-off assisting member; and
a winch coupled to the take-off assisting member.

2. The catapult of claim 1, wherein the take-off assisting member includes:
a contact frame in contact with a strut provided in a landing gear of the aircraft; and
a body frame extending from the contact frame, coupled to a driving wheel, and coupled to the power source.

3. The catapult of claim 1, wherein the take-off assisting member includes:
a contact roller in contact with a landing wheel provided in the landing gear of the aircraft; and
a body frame rotatably coupled to the contact roller, coupled to a driving wheel, and coupled to the power source.

4. The catapult of claim 1, wherein the take-off assisting member includes:
a contact frame in contact with a strut provided in a landing gear of the aircraft;
a contact roller in contact with a landing wheel provided in the landing gear of the aircraft; and
a body frame rotatably coupled to the contact roller, movably coupled to the contact frame, coupled to a driving wheel, and coupled to the power source.

5. The catapult of claim 1, wherein the take-off assisting member is operated in at least one of a manual mode, an autonomous mode, and a remote control mode.

6. The catapult of claim 1, wherein the power source includes at least one of a turbo jet engine, a turbofan jet engine, an afterburning turbojet engine, an afterburning turbofan jet engine, a turboprop jet engine, and a propeller propulsion reciprocating piston engine.

7. The catapult of claim 1, wherein the power source is configured to generate reverse thrust.

8. The catapult of claim 7, wherein the take-off assisting member returns to a starting line by at least one of the reverse thrust mode of the power source and an operation mode of the winch.

9. The catapult of claim 1, wherein the winch includes:
a wire coupled to the take-off assisting member; and
a spool provided for winding the wire and coupled to a support provided on an outside of the take-off assisting member.

10. The catapult of claim 1, wherein the winch includes:
a wire coupled to a support provided on an outside of the take-off assisting member; and
a spool provided for winding the wire and coupled to the take-off assisting member.

11. The catapult of claim 9 or 10, wherein a shock absorber is coupled to at least one of the take-off assisting member, the wire, and the support.

12. The catapult of claim 11, wherein the shock absorber is configured to alleviate shock when the take-off assisting member stops or shock caused by a collision with the support when the take-off assisting member moves backward.
